# EUROPEAN PATENT APPLICATION

(11) **EP 2 192 538 A2**
(43) Date of publication of application: **02.06.2010**
(21) Application number: 09252656.5
(22) Date of filing: 20.11.2009
(51) Int. Cl.: G06Q 10/00, G06Q 99/00

(54) **System for sharing video captured at jobsite**

(30) Priority: 21.11.2008 US 275849
(71) Applicant: Emerson Electric Co., St. Louis, MO 63136 (US)
(72) Inventor: Sooy, Josh, Elyria, OH 44035 (US)
(74) Representative: Bryn-Jacobsen, Caelia

(57) **Abstract**

A jobsite inspection system may include an inspection device configured to capture visual media of a viewing area and store the visual media as a media file; a global positioning system adapted to determine a geographic location of the inspection device and embed a location tag into the media file, the location tag is indicative of the geographical location of the inspection device; and a report generator including computer instructions readable by a computing device adapted to receive and store the image file, the report generator is adapted to generate a job report displaying the visual media and a description of the geographical location.

## Description

### FIELD

The present disclosure relates to a system for sharing information and more particularly to a system for sharing visual media captured at a jobsite.

### BACKGROUND

Many service companies, such as plumbing companies, home inspection companies and other contractors perform jobsite inspections for a variety of purposes such as searching for potential problems, diagnosing problems and checking or verifying a technician's work at the jobsite, for example. Inspection technicians often document their findings with notes, photographs and/or videos taken at the jobsite. Such documentation can be useful for diagnosis, collaborative problem solving, reporting inspection results to clients, and/or preparing for future service or inspection jobs at a particular jobsite. It is often difficult and cumbersome to organize, store and share inspection results efficiently and effectively.

In some circumstances, there is no efficient way to verify that photographs or videos that a client is shown were actually taken at the jobsite at which the client has hired the contractor to work. In such circumstances, the client must personally watch the inspection and the preparation of a subsequent job report to be certain that the photographs and/or videos were not captured at a different jobsite.

This section provides background information related to the present disclosure which is not necessarily prior art.

### SUMMARY

This section provides a general summary of the disclosure, and is not a comprehensive disclosure of its full scope or all of its features.

In one form, the present disclosure provides a jobsite inspection system which may include an inspection device configured to capture visual media of a viewing area and store the visual media as a media file; a global positioning system adapted to determine a geographic location of the inspection device and embed a location tag into the media file, the location tag is indicative of the geographical location of the inspection device; and a report generator including computer instructions readable by a computing device adapted to receive and store the image file, the report generator is adapted to generate a job report displaying the visual media and a description of the geographical location.

In another form, the present disclosure provides a system for sharing jobsite information which may include an inspection device having an elongated flexible member adapted to be removably inserted into an enclosed area; a camera disposed on the flexible member and operable to capture an image at a first jobsite and convert the image into a computer-readable media file, the inspection device embeds a unique identification tag into the computer-readable media file; and a computing device adapted to remotely receive the media file from the inspection tools, the computing device including computing instructions operable to generate a job report including the image. The computing device reads the unique identification tag and selectively stores the media file in one of a plurality of memory locations based at least partially on the unique identification tag.

In yet another form, the present disclosure provides a jobsite information system which may include an imaging device operable to capture a video of a viewing area and convert the video to a media file; a bookmarking tool including a button in communication with the imaging device and, wherein actuating the button generates a bookmark at an image frame of the video that was captured substantially concurrently with the button being actuated; a computing device in communication with the imaging device and operable to remotely receive the media file and the bookmark. The computing device generates a job report allowing a user to selectively view the video and select a link associated with the bookmark to view the video beginning at the image frame.

Further areas of applicability will become apparent from the description provided herein. The description and specific examples in this summary are intended for purposes of illustration only and are not intended to limit the scope of the present disclosure.

### DRAWINGS

Figure 1 is a perspective view of an inspection device at a jobsite according to the principles of the present disclosure;

Figure 2 is a schematic representation of a system for sharing jobsite information according to the principles of the present disclosure;

Figure 3 is a flowchart illustrating the operation of the system of Figure 2;

Figure 4 is a schematic representation of a data store of the system according to the principles of the present disclosure;

Figure 5 is a schematic representation of the data store illustrating the accessibility of information stored therein;

Figure 6 is a schematic representation of a software interface displaying client information according to the principles of the present disclosure;

Figure 7 is a schematic representation of a first job report template according to the principles of the present disclosure;

Figure 8 is a schematic representation of a second job report template according to the principles of the present disclosure;

Figure 9 is a schematic representation of the software interface displaying a report input screen according to the principles of the present disclosure;

Figure 10 is a schematic representation of the software interface displaying a media upload screen according to the principles of the present disclosure;

Figure 11 is a schematic representation of the software interface displaying a media markup screen according to the principles of the present disclosure;

Figure 12 is a schematic representation of a playback screen of the software interface according to the principles of the present disclosure;

Figure 13 is a schematic representation of a edit screen of the software interface according to the principles of the present disclosure;

Figure 14 is a schematic representation of the software interface displaying an uploaded media list according to the principles of the present disclosure; and

Figure 15 is a schematic representation of the software interface displaying a client communication screen according to the principles of the present disclosure.

The drawings described herein are for illustrative purposes only of selected embodiments and not all possible implementations, and are not intended to limit the scope of the present disclosure. Corresponding reference numerals indicate corresponding parts throughout the several views of the drawings.

### DETAILED DESCRIPTION

Example embodiments will now be described more fully with reference to the accompanying drawings.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

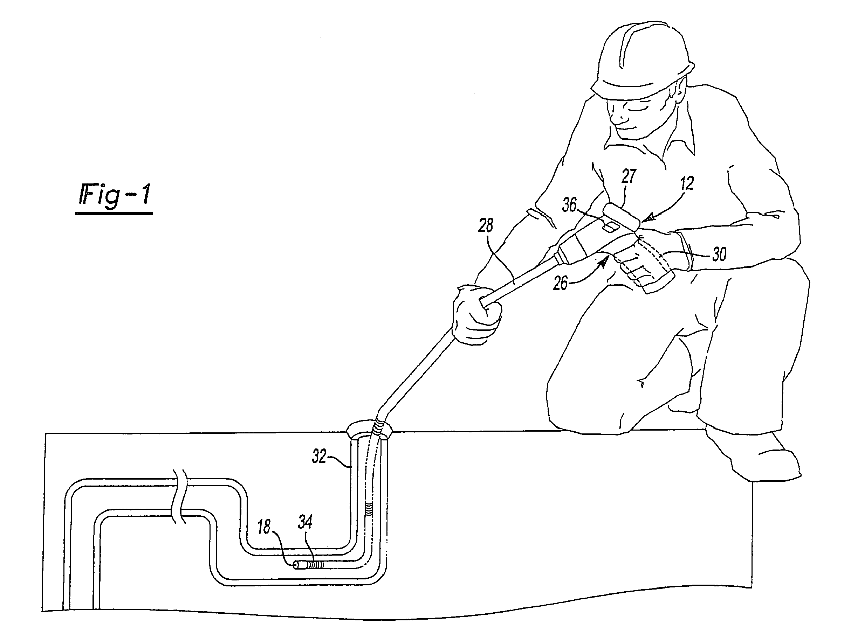

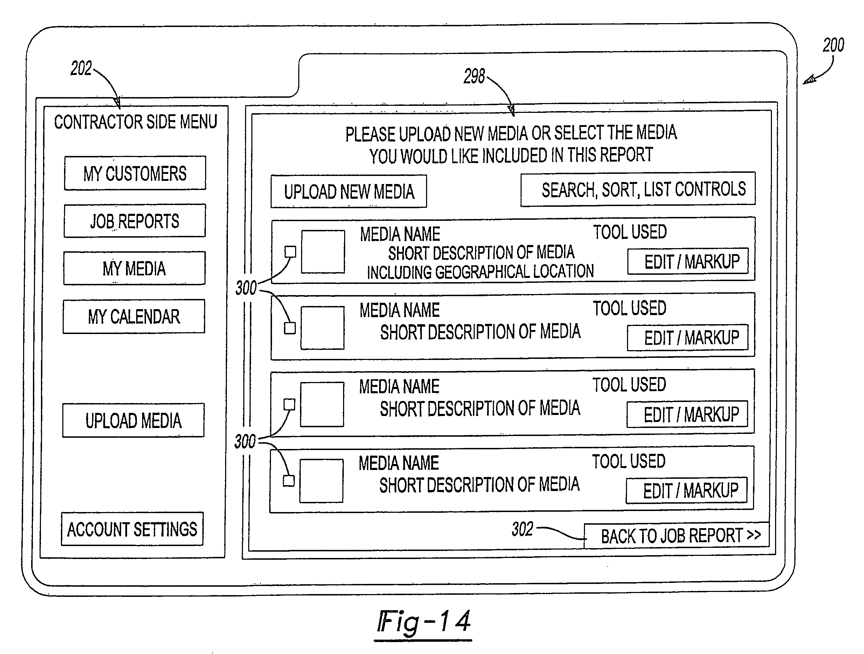

With reference to Figures 1-15, a jobsite information sharing system is provided and is generally referred to as the system 10. As will be subsequently described, the system 10 may be configured to organize, store and display information including audio/video media, descriptions of such media, jobsite notes, and other jobsite information. The system 10 may include an inspection device 12, a computing device 14, a first remote computer 16 and a second remote computer 17. The inspection device 12 may collect the jobsite information and communicate such information to the computing device 14, which may subsequently generate a job report from the jobsite information and allow service personnel and clients to view and share the report via the remote computers 16, 17. The remote computers 16, 17 could be personal computers (e.g:, desktop or laptop computers), PDA's (personal digital assistants), cellular phones, or any other devices adapted to read and display software and/or connect to the Internet.

Referring now to Figures 1-3, the inspection device 12 may include a camera 18, a memory device 20, a global positioning system device or GPS device 22, and a second input device 24. The inspection device 12 may be a hand-held snake device, for example, such as the SeeSnake® micro™, manufactured by Ridge Tool Company. The inspection device 12 may include a generally pistol-shaped housing 26, a display device 27 and an elongated flexible member 28, as shown in Figure 1 and described in greater detail in U.S. Publication No. 2006/0155168, the disclosure of which is hereby incorporated by reference as if fully set forth herein in its entirety. An operator can grasp a grip portion 30 of the housing 26 and feed the elongated flexible member 28 into a drain 32 or other hard to reach or enclosed area, such as an air duct, an engine passage, a chimney or electronics equipment, for example.

It will be appreciated that the inspection device 12 could include a dispensing mechanism (not shown) configured to wind and unwind the elongated flexible member on a drum. Examples of such devices may be of the type embodied in the Ridgid® SeeSnake® Plus manufactured by Ridge Tool Company, or the types disclosed in U.S. Publication No. 2008/0148503 and U.S. Patent Application No. 12/188,433, the disclosures of which are hereby incorporated by reference as if fully set forth herein in their entireties. It will also be appreciated that the inspection device 12 could be otherwise configured and could be any inspection device or tool used in the plumbing, home inspection, construction, or auto repair industries, for example, or any other service or manufacturing industry.

The camera 18 may be disposed on a distal end 34 of the elongated flexible member 28. The camera 18 may capture a still photograph and/or a video of a viewing area and convert the photograph and/or video into a computer-readable visual media file. One or more LED lights or other suitable light source may be disposed proximate the camera 18 to illuminate the viewing area for the photograph or video. It will be appreciated that the camera 18 could be a helmet-mounted camera, a camera integrated into a cellular phone or it could be a stand-alone camera of the type commonly used for general consumer photography and/or video recording, for example.

Upon capturing a photograph or video with the camera 18, a unique identification tag may be embedded into the visual media file. The unique identification tag may be specific to the individual inspection device 12 used to capture the photograph or video. In this manner, the particular inspection device 12 used to capture a particular photograph or video can be identified via the unique identification tag. For example, a first media file captured by a first inspection device may have a first unique identification tag embedded therein, and a second media file captured by a second inspection device may have a second unique identification tag embedded therein. For example, the first and second unique identification tags may be associated with serial numbers of the first and second inspection devices, respectively, or account numbers of operators of the first and second inspection devices, respectively. In an embodiment where the camera 18 is integrated into a cellular phone or the cellular phone is otherwise utilized to communicate media and other information to the computing device 14, such information could be identified and stored according to the phone number of the cellular phone.

The memory device 20 may be integrated with the camera 18 or the inspection device 12, or the memory device 20 may be a separate device adapted for communication with the camera 18. For example, the memory device 20 may be disposed within the housing 26 of the inspection device 12. The memory device 20 can be any suitable non-volatile memory device configured to receive and store visual media files containing photographs and/or videos captured by the camera 18.

The GPS device 22 may be in communication with the camera 18 and can be integrated with the camera 18 or it can be a separate unit disposed within the housing 26 of the inspection device 12, for example. The GPS device 22 may be operable to determine a geographic location of the camera 18 and generate a geographical location tag in response to the camera 18 capturing a photograph or video. The geographic location tag could include geographical coordinates which may be subsequently translated into a street address, for example, by the computing device 14.

The second input device 24 may be an audio recording device, a bookmarking tool or any other device configured to communicate information to the memory device 20. The second input device 24 may include a switch or button 36 disposed on the outside of the housing 26 of the inspection device 12 (Figure 1). For example, an operator may actuate the button 36 to cause the second input device 24 to record his voice or other sounds at a jobsite. Additionally or alternatively, the operator may actuate the button 36 to flag or bookmark a point of interest in a video while the camera 18 is recording the video, as will be subsequently described.

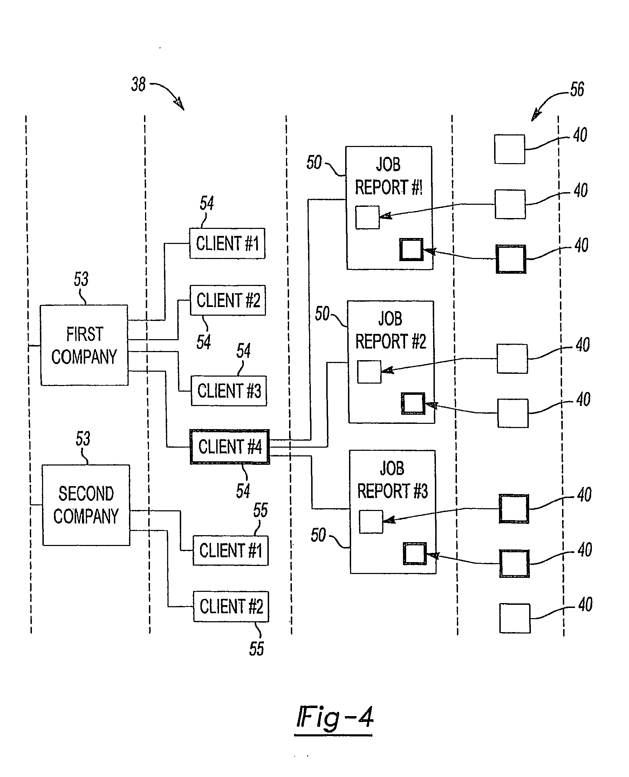

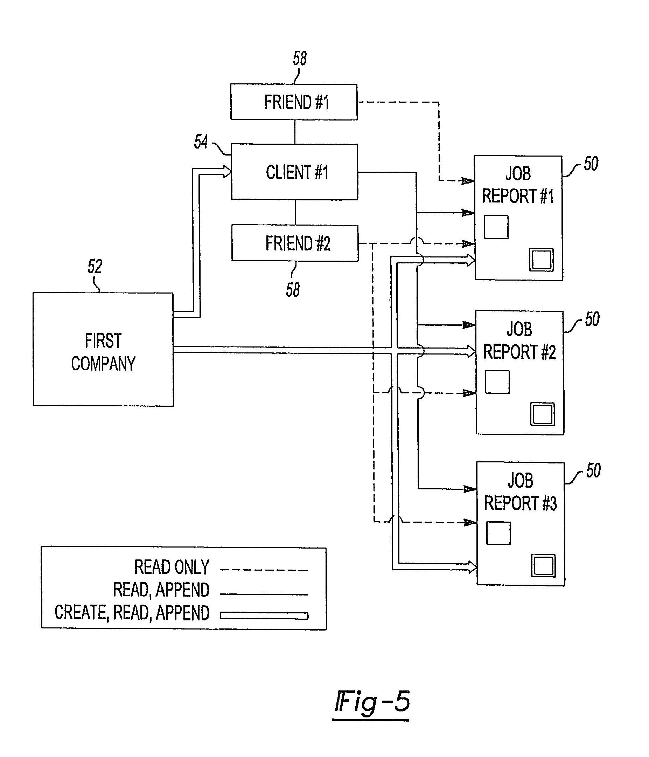

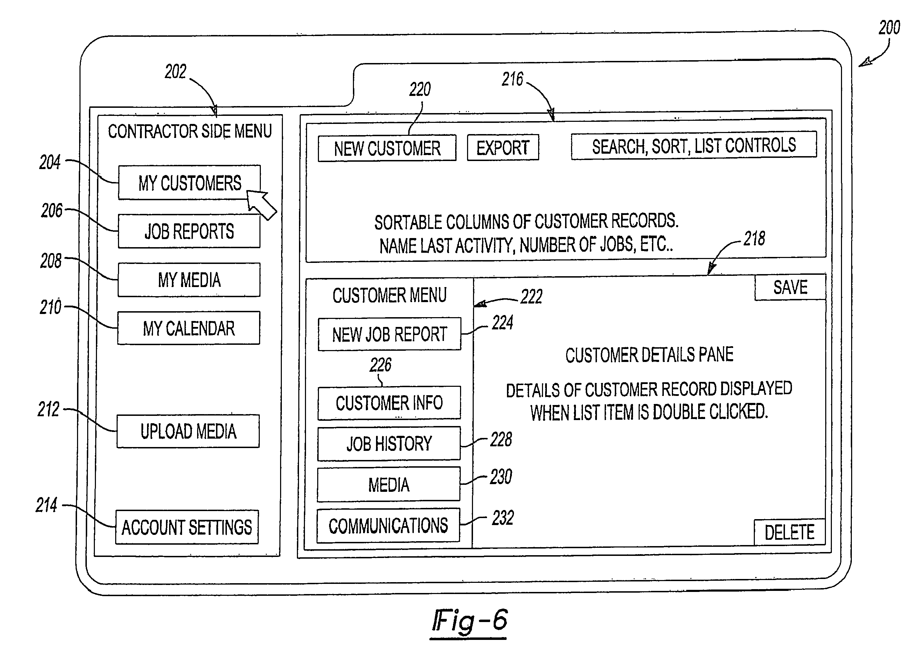

The computing device 14 may be a remotely located server configured to receive the photographs, videos, other visual representations, audio media and bookmarks (hereinafter referred to as the media 40) from the inspection device 12 and the remote computer 16. The computing device 14 may include a data store 38 adapted to store the media 40 received by the computing device 14. The media 40 may be stored in a universally viewable format. As will be subsequently described, the computing device 14 may include a software interface 200 (Figures 6-15) configured to generate a job report 50 (see, e.g., Figures 4 and 5) based upon the media 40 received from the inspection device 12.

An operator may connect the inspection device 12 to the first remote computer 16, via a USB (Universal Serial Bus) connection, for example, or any other suitable connection such that the media 40 can be retrieved from the memory device 20 and uploaded to the computing device 14 via an internet link. Alternatively, the inspection device 12 may be in wireless communication with the computing device 14 via a wireless internet link, a radio frequency (RF) signal, or a cellular communication network, for example. In this manner, the media 40 can be remotely uploaded to the computing device 14. In such an embodiment, the operator may receive technical support regarding a problem encountered at the jobsite. For example, a remotely located operator can coach or advise an on-site operator to help the on-site operator diagnose and/or solve the problem at the jobsite.

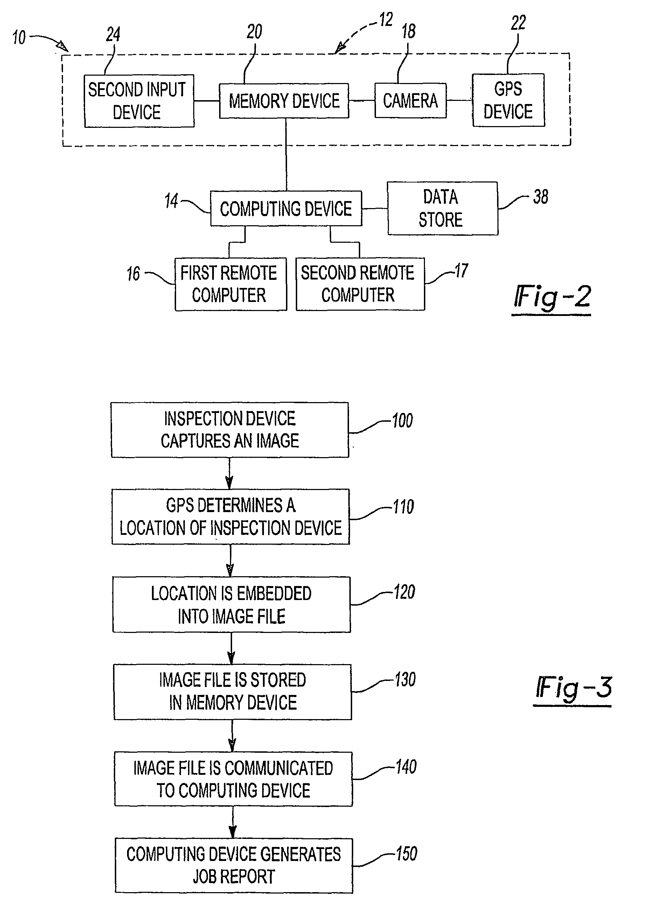

As shown in Figure 3, at step 100, the operator may cause the camera 18 of the inspection device 12 to capture one or more image frames of a viewing area. Upon capturing the one or more image frames, the GPS device 22 may determine the geographic location of the inspection device 12, as shown at step 110. At step 120, the GPS device 22 may embed the geographic location tag into the visual media file, which may be stored in the memory device 20 at step 130. It is contemplated that the geographic location tag could be embedded into the visual media file before, after, or concurrently with the step of storing the visual media file in the memory device 20. At step 140, the visual media file may be communicated to the computing device 14 which may subsequently generate the job report 50 at step 150. The job report 50 may include the media 40, including the one or more images captured at step 100, descriptions of the media 40, the geographic location of the subject of the media 40 (i.e., the geographic location where the photograph or video was captured), problem diagnoses, solutions to problems and/or other comments and information obtained at the jobsite. The job report 50 and media 40 may be stored in the data store 38 and may be selectively retrievable therefrom to be displayed on the first and/or second remote computers 16, 17.

With reference to Figure 4, the organization of the data store 38 will be described. The data store 38 may include first and second company directories 52, 53. The first and second company directories 52, 53 may include first and second pluralities of client subdirectories 54, 55, respectively, and one or more media libraries 56. The first and second company directories 52, 53 may correspond to first and second service companies, respectively. The first and second companies may be service or manufacturing companies such as, for example, plumbing companies, home inspection companies, construction companies, or any other contractor or company. The first plurality of client subdirectories 54 may correspond to clients of the first company, and the second plurality of client subdirectories 55 may correspond to clients of the second company. Each of the client subdirectories 54, 55 may include one or more job reports 50 generated by the computing device 14.

The media 40 communicated to the computing device 14 may be stored in the media library 56. The computing device 14 may detect and identify the unique identification tag embedded into the media file and route the media file into the media library 56 of the company directory 52 or 53 that owns and/or operates the particular inspection device 12 that generated the particular unique identification tag that the computing device 14 detects. In this manner, each individual media file 40 can be routed to the company directories 52, 53 based on type of tool or inspection device 12 used to capture the photograph or video, a serial number of the tool or inspection device 12, a cellular phone number, an account number of the operator or company or any other suitable identifier of the source of the media file 40. Additionally or alternatively, media files 40 can be routed according to the location at which the photograph and/or video were created. In such an embodiment, the computing device 14 may detect the geographical location tag, and route the media 40 to one or more corresponding company directories 52, 53 and/or client subdirectories 54, 55. As will be subsequently described, media 40 can be selected from the media library 56 and incorporated into the job report 50. Additionally or alternatively, the company or client may access and review the media 40 independently of any of the job reports 50 via the first and/or second remote computers 16, 17.

Referring now to Figures 4 and 5, the computing device 14 may limit access to the company directories 52, 53, the client subdirectories 54, 55, the job reports 50, and the media 40. For example, the first company may have unrestricted access to the first company directory 52 and the first plurality of client subdirectories 54, job reports 50 and media files 40 stored under the first company directory 52. For example, the computing device 14 may allow the first company to create, modify and read job reports stored in the first plurality of client subdirectories 54. Each of the first company's clients may have access to the job reports 50 stored in their corresponding client subdirectory 54. For example, as shown in Figure 4, Client #4 can view the job reports 50 and media 40 stored under the client subdirectory 54 corresponding to Client #4. The computing device 14 may also allow the clients to grant one or more friends 58 (Figure 5) read-only access to the job reports 50 saved under the client's subdirectory.

Referring now to Figures 6-15, the computing device 14 may include a software interface 200 adapted to generate the job reports 50 and facilitate management of a company's client and jobsite information. The software interface 200 may generate the job reports 50 from such information. The first and second remote computers 16, 17 can communicate with the computing device 14 via the software interface 200 to enable the company to create, modify and/or view the job reports 50. Access to the software interface 200 may require the operator to enter a valid username and password.

The software interface 200 may include a contractor menu 202 that may be displayed in response to a successful login of an employee or owner of the company. The contractor menu 202 may include a plurality of selectable buttons and/or hyperlinks. Examples of such buttons, shown in Figure 6, include a customers button 204, a job reports button 206, a media button 208, a calendar button 210, an upload media button 212, and an account settings button 214.

As shown in Figure 6, selecting the customers button 204 may cause the software interface 200 to display a customer list box 216 and a customer details window 218. The customer list box 216 may include a searchable and sortable list of the company's existing customers and a selectable new customers button 220 to add new customer profiles to the customer list box 216.

Selecting a customer from the customer list box 216 may cause details of that customer's profile to be displayed in the customer details window 218. Such details may include the customer's name, contact information and any other pertinent information that the company chooses to retain. The customer details window 218 may also include a customer details menu 222 which may include a plurality of selectable buttons such as a new job report button 224, a customer information button 226, a job history button 228, a media button 230, and a communications button 232, for example. The job history button 228 may enable access to previously created job reports 50 stored in that customer's client subdirectory 54 of the data store 38.

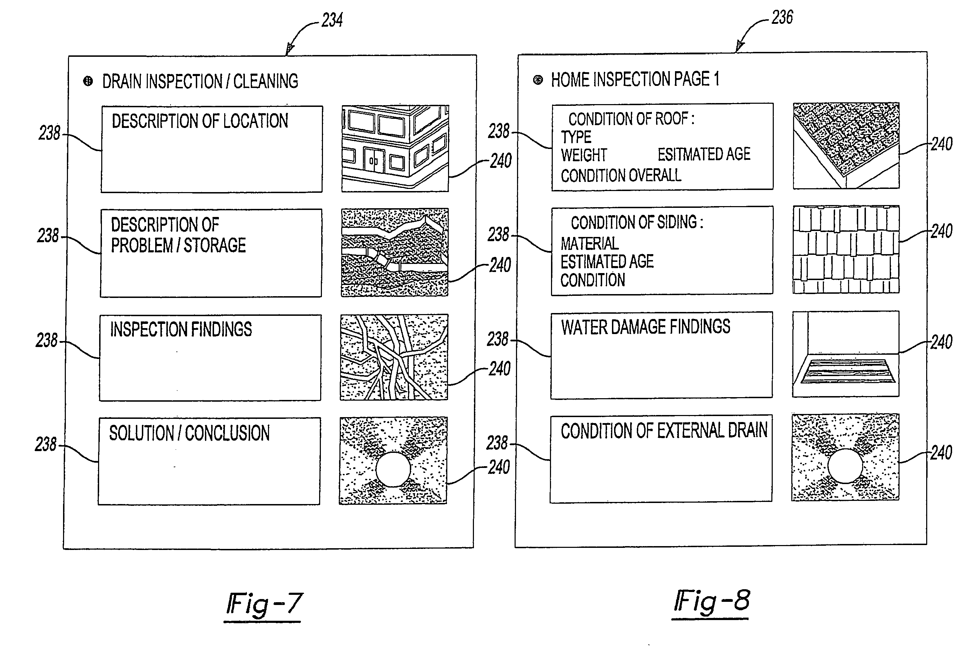

The operator may be prompted to select one of a plurality of job report templates on which the contents of the job report 50 may be subsequently displayed. Each of the plurality of job report templates may be designed for a specific type of job or industry. For example, Figure 7 illustrates an exemplary plumber's template 234 for a job report 50 detailing a drain inspection or cleaning job. Figure 8 illustrates an exemplary building inspector's template 236 for a job report 50 detailing a home inspection job. The templates 234, 236 may include one or more text fields 238 in which text may be displayed, and one or more media attachment fields 240 in which media such as photographs or videos may be displayed, for example. Additionally or alternatively, the operator may design a customized template to suit the company's needs.

It will be appreciated that one of the templates could be selected as a default template, such that job report will automatically be displayed on the default template. In such an embodiment, the operator may change the default template or temporarily select a different template by changing the company's account settings accessible via the account settings button 214. It will also be appreciated that the step of selecting a template may be done at any point prior to the completion of the job report 50.

Additionally or alternatively, the computing device 14 automatically select a template based on data embedded into a received media file 40. Such embedded data could include, for example, the unique identification tag, the geographical location tag, the type or serial number of the tool or inspection device 12 used to capture the photograph or video, or any other identifier from which the computing device 14 could determine the source of the media 40. For example, the computing device 14 could be configured such that receipt of a media file from an inspection device typically used in the plumbing industry causes the computing device 14 to automatically select a job report template suited for plumbing jobs. As another example, the computing device 14 could be configured such that receipt of a media file having embedded data corresponding to a particular inspection device serial number causes the computing device 14 to automatically select a particular job report template corresponding to the line of work of the company that owns that particular inspection device. It is contemplated that the computing device 14 could automatically select a job report template based on any other suitable identifying information embedded in the media 40 or communicated to the computing device 14.

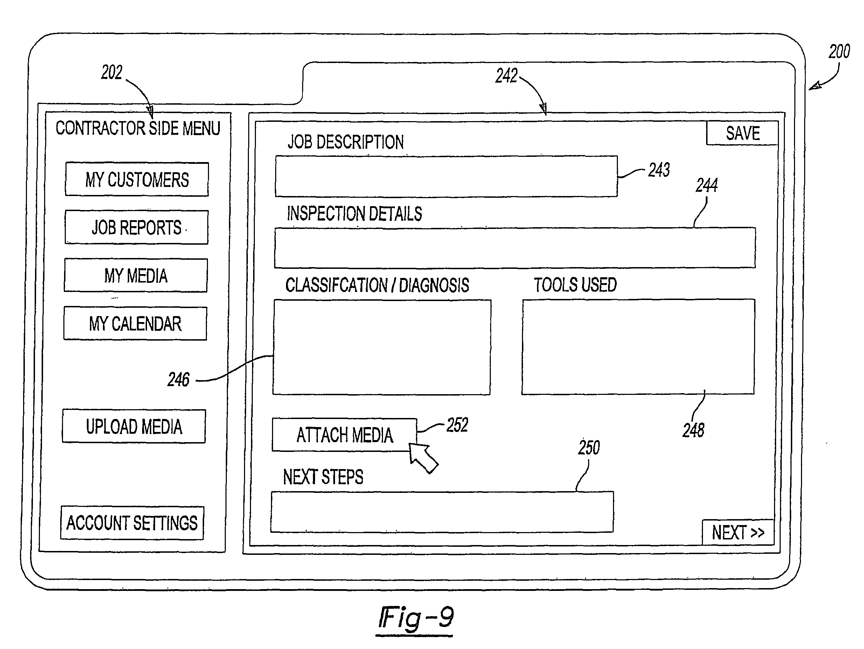

Selecting the new job report button 224 (Figure 6) may enable the company to create a new job report 50 relating to a job in progress or a recently completed job, for example. In response to the operator selecting the new job report button 224, the software interface 200 may display a report input screen 242 shown in Figure 9. The report input screen 242 may include a job description field 243, an inspection details field 244, a classification/diagnosis field 246, a tools used field 248, a next steps field 250, an attach media button 252 and/or any other fields corresponding to the one or more text fields 238 of the job report template 234 or 236, for example. The operator may input text into the fields 243-250 including descriptions, comments, diagnoses, conclusions, solutions and/or other information regarding the inspection or work done at the jobsite. It will be appreciated that the fields 243-250 may correspond to the text fields 238 of the template 234, 236 (or any other customized template). Accordingly, the fields 243-250 may differ from those shown in Figure 9.

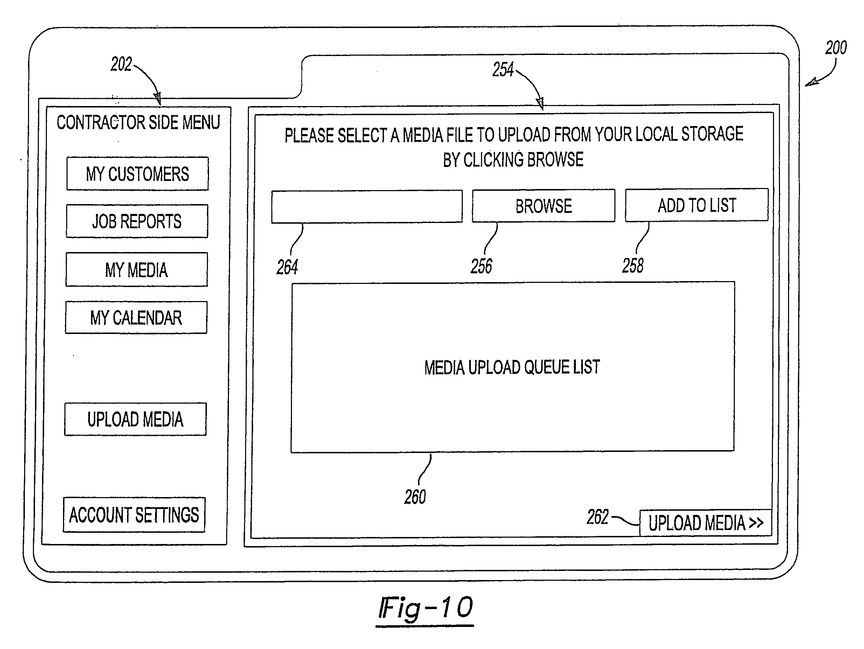

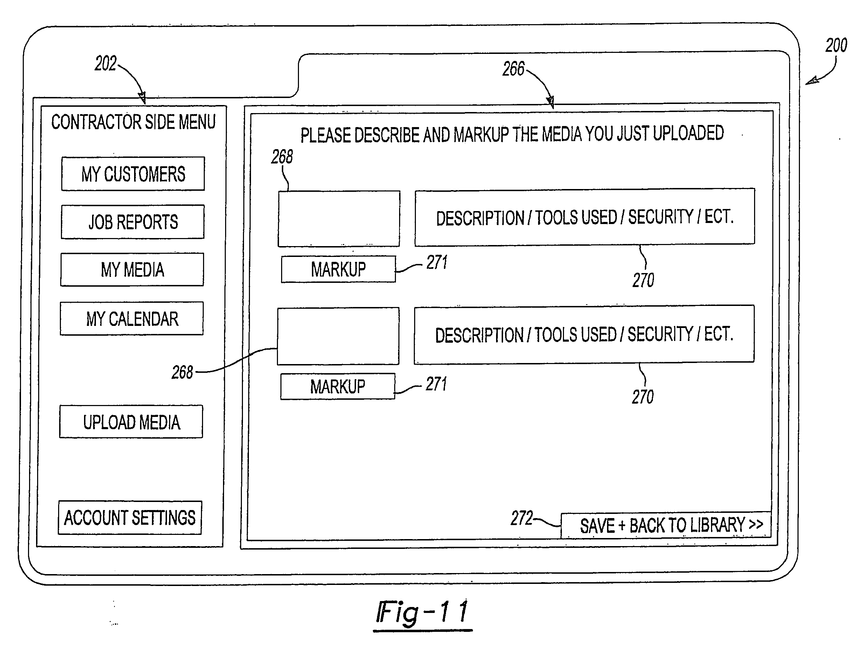

Upon selecting the attach media button 252, the software interface 200 may display a media upload screen 254. As shown in Figure 10, the media upload screen 254 may include a browse button 256, an add button 258, a queue list 260 and an upload button 262. Selecting the browse button 256 may allow the operator to browse the media library 56 of the data store 38 (Figure 4) to select one or more media file 40 therefrom to be included in the job report 50. Upon selecting the desired media file 40, the file name of the selected media file 40 may appear in a file name field 264 which may be disposed adjacent the browse button 256, as shown in Figure 10. The operator may then select the add button 258 which may cause the selected media file 40 to appear in the queue list 260. The operator may repeat the above described process to add additional media files 40 to the queue list 260 if desired. To upload the one or more selected media files from the queue list 260, the operator may select the upload button 262 which may cause the software interface 200 to display a media markup screen 266, as shown in Figure 11.

The media markup screen 266 could include a preview field 268, a description field 270, a markup button 271, and a save button 272. The preview field 268 can include a thumbnail, a file name or other preview of the photograph, video or other medium of the media file 40 uploaded from the media upload screen 254 (Figure 10). The software interface 200 may automatically populate the description field 270 with information such as the geographical location (expressed as a street address or as geographical coordinates, for example) at which the medium was captured and/or a description of the inspection device 12 used to capture the medium. The geographic location and/or description of the inspection device 12 could be automatically entered into one or more of the text fields 238 (Figures 7 and 8). As described above, the geographical location can be determined from the geographical location tag embedded in the media file by the GPS device 22. The geographical location tag could include geographical coordinates that may be translated into a street address by the computing device 14. Alternatively, the GPS device 22 may determine the street address and embed geographical location tag as the street address. Similarly, the description of the inspection device 12 can be determined from the unique identification tag embedded into the media file. Additionally or alternatively, the operator may manually input notes, comments or further descriptions of the medium shown in the preview field 268.

Although portions of the description of the media, comments, diagnoses, solutions are other information may be modifiable, the software interface 200 may be configured to prevent the company and client from modifying the automatically displayed geographic location of the subject of the media 40. In such an embodiment, the company and its clients can be sure that the media 40 integrated into a particular job report 50 was, in fact, captured or created at the jobsite associated with the particular job report 50.

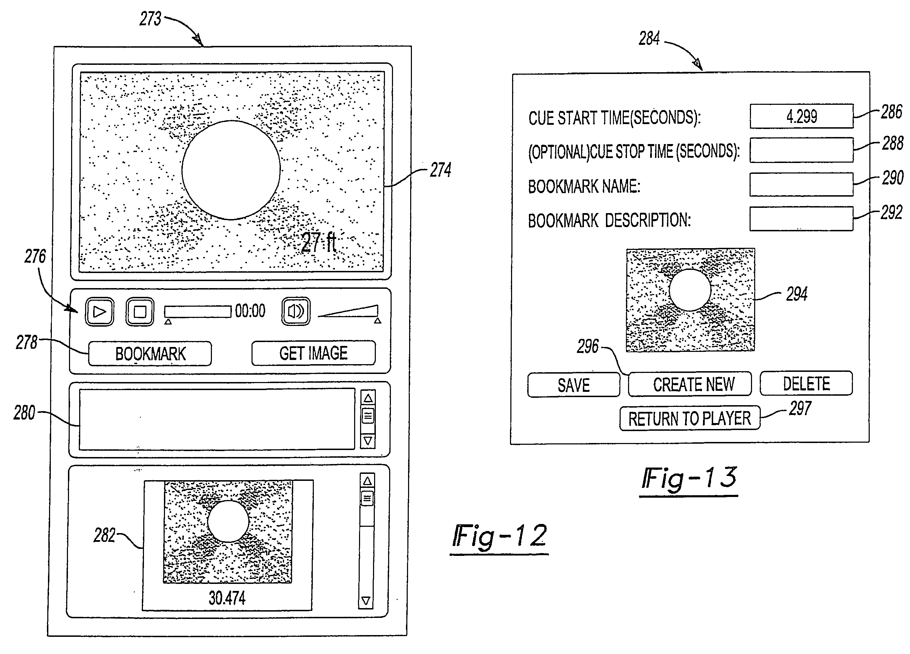

The markup button 271 (Figure 11) may be selected to preview, markup a photograph or video and/or bookmark a video, for example. Upon selecting the markup button 271, the software interface 200 may display a playback screen 273, shown in Figure 12. The playback screen 273 may include a playback pane 274, playback controls 276, a bookmark button 278, a text box 280 and a thumbnail pane 282. The operator may actuate the playback controls 276 to play a video on the playback screen 273. The playback controls 276 may also be configured to fast forward, rewind, pause and/or stop the video.

Upon selecting the bookmark button 278, the software interface 200 may display an edit screen 284, as shown in Figure 13. The edit screen 284 may include a start time field 286, a stop time field 288, a name field 290 and a description field 292. To create a bookmark, the operator may enter a time corresponding to an image frame 294 of the video which may show a point of interest in the video captured at the jobsite. The image frame 294 may be displayed as a thumbnail image on the edit screen 284. The image frame 294 may be saved as a still photograph. Additionally or alternatively, the operator can optionally enter a second subsequent time in the stop time field 288, thereby creating a bookmark including a plurality of consecutive image frames which may illustrate one or more points of interest in the video. The operator can enter and name of the bookmark (or point of interest) and a description of what is shown in the bookmarked image frame(s) into the name field 290 and description field 292, respectively. The operator can create one or more additional bookmarks by selecting a create new button 296 (Figure 13) and repeating the process described above for one or more additional points of interest in the video.

The operator can select a return to player button 297 to return to the playback screen 273. The name and description of the bookmark(s) may be displayed in the text box 280 (Figure 12), and the thumbnail image frame 294 may be displayed in the thumbnail pane 282 (Figure 12). The bookmark may be a time code in the video that may allow the company and/or client to select a bookmark hyperlink, for example, that may cause the video to begin playing from the bookmarked point of the video.

Additionally or alternatively, the operator may create a bookmark using the second input device 24 of the inspection device 12 while performing the inspection at the jobsite. While the camera 18 is capturing the video, the technician may actuate the button 36 disposed on the housing 26 of the inspection device 12 (see Figures 1 and 2), thereby creating a bookmark at that point in the video. The bookmark may be embedded into the media file 40 containing the video and may be stored in the memory device 20 of the inspection device 12 and may be subsequently communicated to the computing device 14 as described above. A name and description of the bookmark can be subsequently added via the software interface 200, in the manner described above.

After adding any descriptions, markups and/or bookmarks to the media, the software interface 200 may display an uploaded media list 298, as shown in Figure 12. The uploaded media list 298 may include a list of the media files 40 uploaded from the media library 56 with a selection box 300 disposed adjacent each media file 40 listed thereon. The operator can select each of the selection boxes 300 that the operator wants to include in the job report 50. The operator can then select a back to job report button 302 which will cause the software interface 200 to integrate the selected media files 40 and any associated descriptions, comments, bookmarks and other information into the job report 50.

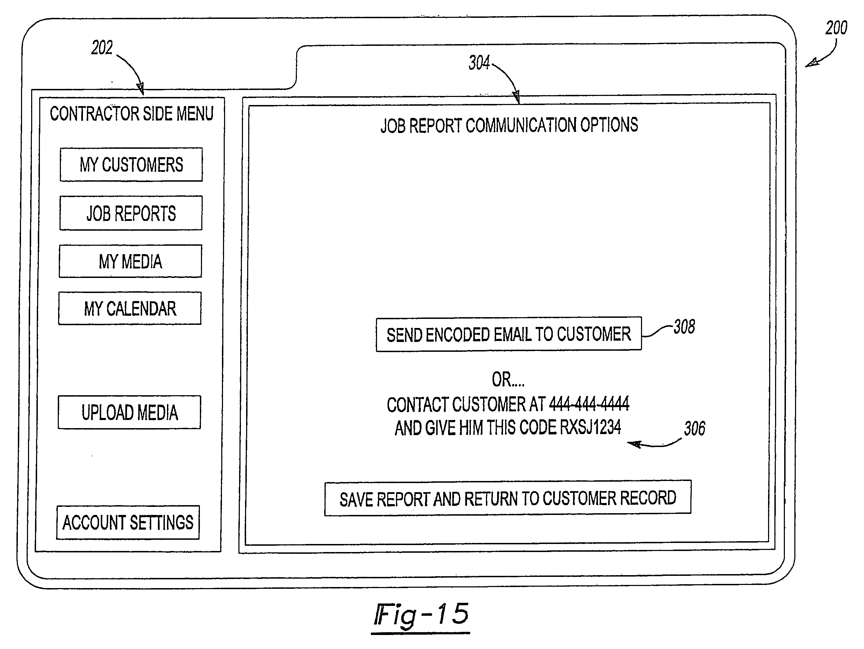

Upon generating the job report 50, the software interface 200 may display a client communication screen 304, shown in Figure 15, which may prompt the operator to communicate an access code 306 to the client to enable to client to access and view the job report 50. The client communication screen 304 may include an email button 308, the client's phone number and/or other contact information, and the access code 306 for the newly generated job report 50. The operator can select the email button 308 to cause the computing device 14 to generate and send an automated email to the client containing the access code for the newly generated job report and/or other pertinent information. Additionally or alternatively, the operator can use the contact information displayed on the client communication screen 304 to contact the client and communicate the access code 306 via telephone or mail, for example. It will be appreciated that the access code 306 shown in Figure 15 is merely exemplary and can be any combination of characters. A unique access code could be generated for each individual client or each individual job report.

The foregoing description of the embodiments has been provided for purposes of illustration and description. It is not intended to be exhaustive or to limit the invention. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the invention, and all such modifications are intended to be included within the scope of the invention.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a", "an" and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.
1. A jobsite inspection system comprising:
   an inspection device configured to capture visual media of a viewing area and store said visual media as a media file;
   a global positioning system associated with the inspection device and adapted to determine a geographic location of said inspection device, where the inspection device embeds a location tag with the geographic location of the inspection device into said media file; and
   a report generator embodied as computer executable instructions on a computing device and adapted to receive the media file from the inspection device, the report generator is configured to generate a job report displaying said visual media and the embedded location tag.
2. The jobsite inspection system of 1 wherein said computing device is adapted to store a plurality of job reports and allow selective access thereto.
3. The jobsite inspection system of 1 wherein said report generator is adapted to communicate with a plurality of inspection devices disposed in a plurality of respective geographic locations; and preferably wherein said computing device is adapted to receive a plurality of media files corresponding to said plurality of inspection devices.
4. The jobsite inspection system of 1 wherein said inspection device is adapted to embed a unique identification tag indicative of the inspection device into said media file; and preferably wherein said computing device routes and stores said media file based at least partially on said identification tag.
5. The jobsite inspection system of 1 wherein said media file is communicated to said report generator via a wireless communication link; or wherein said media file is communicated to said report generator via an Internet connection; or wherein said report generator is adapted to allow a user to input information into said job report; or wherein said location tag cannot be modified and is inseparable from said media file; or wherein said geographic location cannot be edited on said job report; or wherein said job report is partially generated from one of a plurality of job-specific templates.
6. The jobsite inspection system of 1 further comprising an editing interface adapted to allow one or more bookmarks to be added to a video in said job report; and preferably wherein said one or more bookmarks include a description of at least a portion of said video.
7. A system for sharing jobsite information comprising:
   an inspection device having an elongated flexible member adapted to be removably inserted into an enclosed area;
   a camera disposed on said flexible member and operable to capture an image at a first jobsite and convert said image into a computer-readable media file, said inspection device embeds a unique identification tag into said computer-readable media file; and
   a computing device remotely located from the inspection device and configured to receive the media file from said inspection device, wherein said computing device reads said unique identification tag and selectively stores said media file in one of a plurality of memory locations residing on the computing device based at least partially on said unique identification tag.
8. The system of 7 further comprising a global positioning system integrated with the inspection device, wherein said global positioning system determines a geographic location of said inspection device and embeds a location tag into said media file.
9. The system of 8 wherein said computing device detects said location tag and displays a description of said geographical location in said job report; and preferably wherein said description of said geographical location cannot be edited.
10. The system of Claim 7 wherein said computing device is adapted to store a plurality of job reports and allow selective access thereto; or wherein said computing device is adapted to communicate with a plurality of inspection devices disposed in a plurality of respective geographic locations; or wherein said media file is communicated to said computing device via a wireless communication link; or wherein said media file is communicated to said computing device via an Internet connection; or wherein said computing device is adapted to allow a user to input information into said job report; or wherein said job report is partially generated from one of a plurality of job-specific templates.
11. The system of Claim 7 further comprising an editing interface adapted to allow one or more bookmarks to be added to a video in said job report; and preferably wherein said one or more bookmarks include a description of at least a portion of said video.
12. A jobsite information system comprising:
   an inspection device having an imaging device operable to capture a video of a viewing area and convert said video to a media file; and a bookmarking tool interface with the imaging device and, wherein actuating an input of the bookmarking tool generates a bookmark at an image frame of said video that was captured substantially concurrently with said button being actuated; and
   a computing device in data communication with the inspection device to receive the media file with at least one bookmark from the inspection device, wherein said computing device generates a job report allowing a user to selectively view the video of the media file and select a link associated with said bookmark to view said video beginning at said image frame.
13. The system of 12 further comprising a global positioning system coupled to said imaging device, wherein said global positioning system determines a geographic location of said imaging device and embeds a location tag into said media file.
14. The system of 13 wherein said computing device detects said location tag and displays a description of said geographical location in said job report; and preferably wherein said description of said geographical location cannot be edited.
15. The system of 12 wherein said media file is communicated to said computing device via a cellular communication network; and preferably wherein said imaging device is integrated with a cellular phone and said computing device stores said media file according to a phone number of said cellular phone.
16. The system of 12 wherein a unique identification tag is embedded into said media file to identify said imaging device; and preferably wherein said computing device routes and stores said media file based at least partially on said identification tag.
17. The system of 12 wherein said imaging device is disposed on an inspection device having an elongated flexible member adapted to be removably inserted into an enclosure; or wherein said media file is communicated to said computing device via an Internet connection; or wherein said job report is partially generated from one of a plurality of job-specific templates.

## Claims

1. A jobsite inspection system comprising:
an inspection device configured to capture visual media of a viewing area and store said visual media as a media file;
a global positioning system associated with the inspection device and adapted to determine a geographic location of said inspection device, where the inspection device embeds a location tag with the geographic location of the inspection device into said media file; and
a report generator embodied as computer executable instructions on a computing device and adapted to receive the media file from the inspection device, the report generator is configured to generate a job report displaying said visual media and the embedded location tag.

2. The jobsite inspection system of Claim 1 wherein said computing device is adapted to store a plurality of job reports and allow selective access thereto.

3. The jobsite inspection system of Claim 1 wherein said report generator is adapted to communicate with a plurality of inspection devices disposed in a plurality of respective geographic locations; and preferably wherein said computing device is adapted to receive a plurality of media files corresponding to said plurality of inspection devices.

4. The jobsite inspection system of Claim 1 wherein said inspection device is adapted to embed a unique identification tag indicative of the inspection device into said media file; and preferably wherein said computing device routes and stores said media file based at least partially on said identification tag.

5. The jobsite inspection system of Claim 1 wherein said media file is communicated to said report generator via a wireless communication link; or wherein said media file is communicated to said report generator via an Internet connection; or wherein said report generator is adapted to allow a user to input information into said job report; or wherein said location tag cannot be modified and is inseparable from said media file; or wherein said geographic location cannot be edited on said job report; or wherein said job report is partially generated from one of a plurality of job-specific templates.

6. The jobsite inspection system of Claim 1 further comprising an editing interface adapted to allow one or more bookmarks to be added to a video in said job report; and preferably wherein said one or more bookmarks include a description of at least a portion of said video.

7. A system for sharing jobsite information comprising:
an inspection device having an elongated flexible member adapted to be removably inserted into an enclosed area;
a camera disposed on said flexible member and operable to capture an image at a first jobsite and convert said image into a computer-readable media file, said inspection device embeds a unique identification tag into said computer-readable media file; and
a computing device remotely located from the inspection device and configured to receive the media file from said inspection device, wherein said computing device reads said unique identification tag and selectively stores said media file in one of a plurality of memory locations residing on the computing deivce based at least partially on said unique identification tag.

8. The system of Claim 7 further comprising a global positioning system integrated with the inspection device, wherein said global positioning system determines a geographic location of said inspection device and embeds a location tag into said media file.

9. The system of Claim 8 wherein said computing device detects said location tag and displays a description of said geographical location in said job report; and preferably wherein said description of said geographical location cannot be edited.

10. The system of Claim 7 wherein said computing device is adapted to store a plurality of job reports and allow selective access thereto; or wherein said computing device is adapted to communicate with a plurality of inspection devices disposed in a plurality of respective geographic locations; or wherein said media file is communicated to said computing device via a wireless communication link; or wherein said media file is communicated to said computing device via an Internet connection; or wherein said computing device is adapted to allow a user to input information into said job report; or wherein said job report is partially generated from one of a plurality of job-specific templates

11. The system of Claim 7 further comprising an editing interface adapted to allow one or more bookmarks to be added to a video in said job report; and preferably wherein said one or more bookmarks include a description of at least a portion of said video.

12. A jobsite information system comprising:
an inspection device having an imaging device operable to capture a video of a viewing area and convert said video to a media file; and a bookmarking tool interface with the imaging device and, wherein actuating an input of the bookmarking tool generates a bookmark at an image frame of said video that was captured substantially concurrently with said button being actuated; and
a computing device in data communication with the inspection device to receive the media file with at least one bookmark from the inspection device, wherein said computing device generates a job report allowing a user to selectively view the video of the media file and select a link associated with said bookmark to view said video beginning at said image frame.

13. The system of Claim 12 further comprising a global positioning system coupled to said imaging device, wherein said global positioning system determines a geographic location of said imaging device and embeds a location tag into said media file.

14. The system of Claim 13 wherein said computing device detects said location tag and displays a description of said geographical location in said job report; and preferably wherein said description of said geographical location cannot be edited.

15. The system of Claim 12 wherein said media file is communicated to said computing device via a cellular communication network; and preferably wherein said imaging device is integrated with a cellular phone and said computing device stores said media file according to a phone number of said cellular phone.

16. The system of Claim 12 wherein a unique identification tag is embedded into said media file to identify said imaging device; and preferably wherein said computing device routes and stores said media file based at least partially on said identification tag.

17. The system of Claim 12 wherein said imaging device is disposed on an inspection device having an elongated flexible member adapted to be removably inserted into an enclosure; or wherein said media file is communicated to said computing device via an Internet connection; or wherein said job report is partially generated from one of a plurality of job-specific templates.
